# EUROPEAN PATENT APPLICATION

(11) **EP 1 152 346 A2**
(43) Date of publication of application: **07.11.2001**
(21) Application number: 01102902.2
(22) Date of filing: 07.02.2001
(51) Int. Cl.: G06F 17/14

(54) **Scalable architecture for multiply/accumulate unit**

(30) Priority: 04.05.2000 US 565016
(71) Applicant: Hewlett-Packard Company, A Delaware Corporation, Palo Alto, CA 94304 (US)
(72) Inventor: Crane, Randy T., Fort Collins, CO 80525 (US)
(74) Representative: Schoppe, Fritz, Dipl.-Ing.

(57) **Abstract**

A data processing device which includes an input unit (400) programmable to receive data in parallel or serial format and to output the received data to a processing unit (50) in parallel. The processing unit (50) performs multiply and accumulate operations on data in accordance with a predefined coefficient and outputs the processed data to a switching unit (500) programmable to route the processed data.

## Description

### TECHNICAL FIELD

The present invention is generally related to a scalable processing device for assisted multiply and accumulate algorithms, and more particularly to a digital signal processing multiply and accumulate structure having programmable input and output for receiving data and routing it to a processing unit for processing.

### BACKGROUND OF THE INVENTION

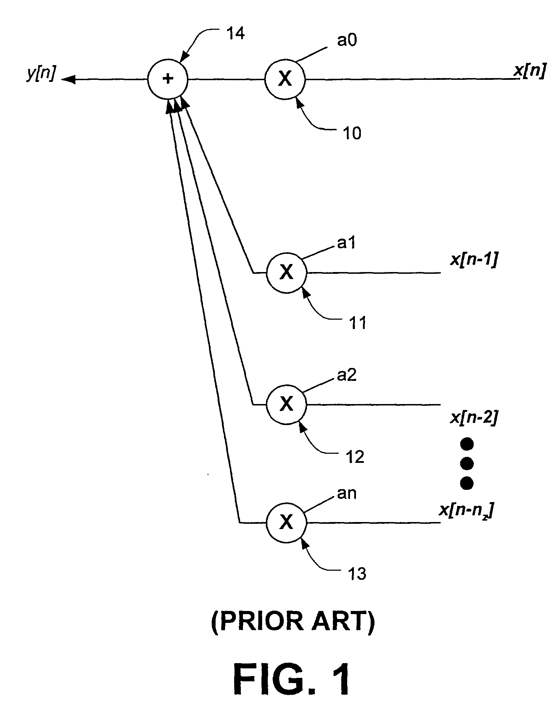

In typical digital signal processing systems, it is common for signal processing algorithms to be carried out via parallel signal processing units in accordance with predetermined coefficients. Typical digital signal processing devices utilize a multiply and accumulate architecture similar to that shown in FIG. 1 to carryout processing of data input x[n] through x[n-n_{z}]. In FIG. 1 data input x[n] through x[n-n_{z}] is provided to respective multipliers 10, 11, 12 and 13. 'Multipliers 10 through 13, carry out multiplication operations on the respective input data in accordance with coefficients a0, a1, a2 through an, respectively. The output of multipliers 10 through 13 is then provided to accumulator 14. In turn, accumulator 14 outputs a sum y[n].

In general, systems for executing algorithms, such as those used in performing convolution calculations, have included systems implemented in firmware, special purpose hardware and digital signal processing (DSP) microprocessors. Firmware implementations provide for flexibility, however, are typically very slow in processing data. Special purpose hardware offers fast processing time, however, because of its specialized nature offers no flexibility in terms of performing other than the specialized function for which it is designed. While DSP microprocessors can be optimized for a particular algorithm, they may not be suitable for certain applications, such as in embedded applications in which high performance yet low power consumption is required.

Thus, a heretofore unaddressed need exists in the industry to address the aforementioned deficiencies and inadequacies.

### SUMMARY OF THE INVENTION

The present invention provides a system for carrying out multiply and accumulate algorithms. Briefly described, in architecture, the system can be implemented as follows: an input unit for receiving data and providing the data to a processing unit in parallel; the processing unit processes the data received from the input unit to generate an output signal which is routed to a programmable output unit for selectively routing the output signal.

The present invention can also be viewed as providing a method of processing data. In this regard, the method can be broadly summarized by the following steps: determining whether data is input in serial or parallel format; configuring input buffer to receive data in the determined format; receiving data via the input buffer; outputting data in parallel to an algorithm processing unit. Processed data is then output from the algorithm processing unit to an output-switching unit to output processed data via a predetermined route.

Other features and advantages of the present invention will become apparent to one with skill in the art upon examination of the following drawings and detailed description. It is intended that all such additional features and advantages be included herein within the scope of the present invention.

### BRIEF DESCRIPTION OF THE DRAWINGS

The invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views.
FIG. 1 is an illustration of a typical prior art algorithm-processing device;
FIG. 2 is a block diagram of the present invention;
FIG. 3 is a diagram illustrating a data stream for purposes of discussion of the present invention;
FIG. 4 is a diagram illustrating serial shifting of data into an input buffer;
FIG. 5 is a diagram illustrating parallel input of data into an input buffer;
FIG. 6 is a block diagram illustrating one embodiment of the present invention;
   and
FIG. 7 is a block diagram illustrating an alternative embodiment of the present invention.
FIG. 8 is a flowchart illustrating the method of the present invention.

### DETAILED DESCRIPTION OF THE PREFERRED EMBODIMENT

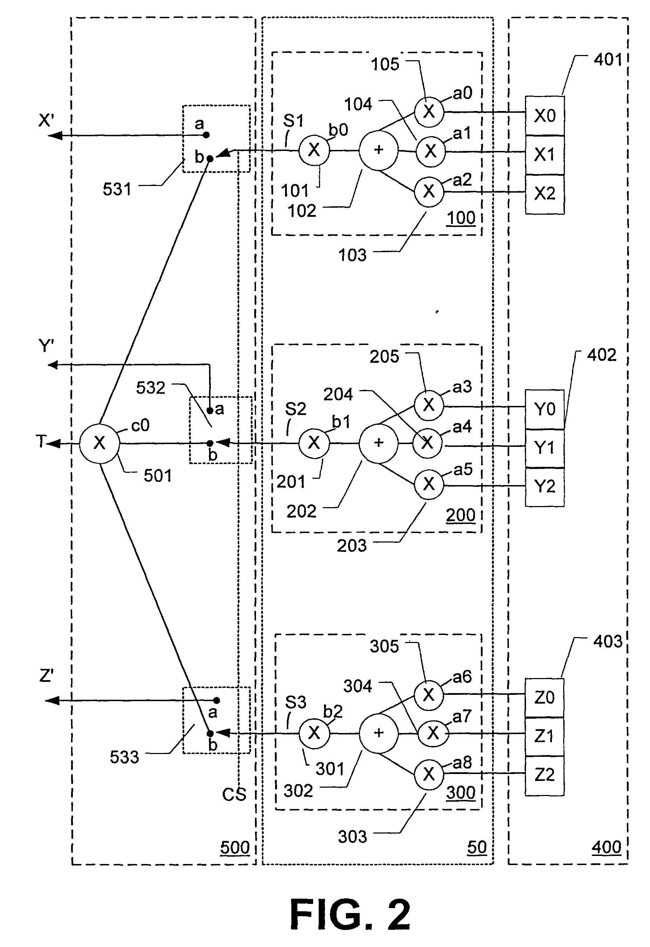

With reference to FIG. 2, one embodiment of the present invention will be discussed. There is a programmable input unit 400, an algorithm processing unit 50 and a programmable output unit 500.

Programmable input unit 400 includes input buffers 400, 401 and 402. Input buffer 401 provides data input to processing unit 100 of algorithm processing unit 50. Input buffer unit 402 provides data input to processing unit 200. Likewise, input buffer 403 provides data input to processing unit 300. Input buffers 401, 402 and 403 are preferably programmable input-output first-in/first-out (FIFO) registers composed of separate data elements (bits) for storing data which can be programmed to receive data in parallel or serially.

Algorithm processing unit 50 includes processing units 100, 200 and 300. Processing unit 100 includes multipliers 103, 104 and 105. Multipliers 103, 104 and 105 receive input data from input buffer 401 and perform multiplication operations on the received data in accordance with predefined coefficients a0, a1 and a2, respectively. More particularly, multipliers 103, 104 and 105 will multiply the predefined coefficient by the input data from buffer 401. Multipliers 103, 104 and 105 then output the processed data to an accumulator 102. Accumulator 102 then outputs the accumulated data to multiplier 101 which then carries out multiplication operations in accordance with a pre-defined coefficient b0 to produce an output data signal S1.

Similarly, processing unit 200 includes multipliers 203, 204 and 205. Multipliers 203, 204 and 205 receive input data from input buffer 402 and perform multiplication operations on the received data in accordance with predefined coefficients a3, a4 and a5, respectively. More particularly, multipliers 203, 204 and 205 will multiply the predefined coefficient by the input data from buffer 402. Multipliers 203, 204 and 205 then output the processed data to an accumulator 202. Accumulator 202 then outputs the accumulated data to multiplier 201 which then carries out multiplication operations in accordance with a pre-defined coefficient b1 to produce an output data signal S2. Processing unit 300 includes multipliers 303, 304 and 305. Multipliers 303, 304 and 305 receive input data from input buffer 403 and perform multiplication operations on the received data in accordance with predefined coefficients a6, a7 and a8, respectively. More particularly, multipliers 303, 304 and 305 will multiply the predefined coefficient by the input data from buffer 403. Multipliers 303, 304 and 305 then output the processed data to an accumulator 302. Accumulator 302 outputs the accumulated data to multiplier 301 which then carries out multiplication operations in accordance with a pre-defined coefficient b2 to produce an output data signal S3.

With respect to the predefined coefficients a0 through a8, it will be understood that these coefficients could be stored in a memory device, or could be generated on-the-fly by other operations and presented for use to the respective multiplier. More particularly, these coefficients could be the result of calculations carried out by, for example, a central processor (CPU), controller, logic gating, or software.

Output switching unit 500 includes switching units 531, 532 and 533. Switching unit 531 receives the input from processing unit 100. Switching unit 532 receives the output of the processing unit 200. Switching unit 533 receives the output of processing unit 300. Switching units 531, 532 and 533 are preferably commonly controlled and act in unison to direct the output of processing units 100, 200 and 300, respectively. In a preferred embodiment, each switch unit 531, 532 and 533 is preferably configured to provide for a first setting "a" and a second setting, "b". Setting "a" corresponds to a first signal route, while setting "b" corresponds to a second signal route. Depending on the setting of switch units 531, 532 and 533, the respective outputs of processing units 100, 200 and 300 will either be (1) each directly routed and output separately, in parallel, as in the case of setting "a"; or (2) routed to multiplier 501 and multiplied together to produce a common output signal X, as in the case were the switch setting is "b". The setting selection of switch units 531, 532 and 533 are controlled in accordance with a control signal Z. Control signal CS may be generated via a control source, such as, for example, a central processor (CPU), controller or other logic gating or software code. Alternatively, each switch unit 531, 532 and 533 may be independently controlled by independent control signals generated by, for example, different control sources. Further, each switch unit 531, 532 and 533 may be independently controlled by independent control signals generated by, for example, the same control source.

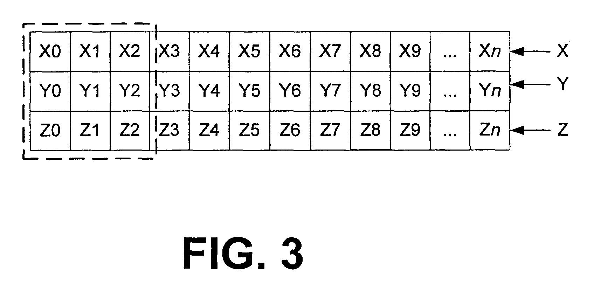

FIG. 3 illustrates an example of data input that could be input to, for example, the embodiment illustrated in FIG. 2. There is provided a bitstream X, a bitstream Y and a bitstream Z. Bitstream X includes data bits X0 through X*n*. While bitstream Y includes data bits Y0 through Y*n*. Likewise, bitstream Z includes data bits Z0 through Z*n.*

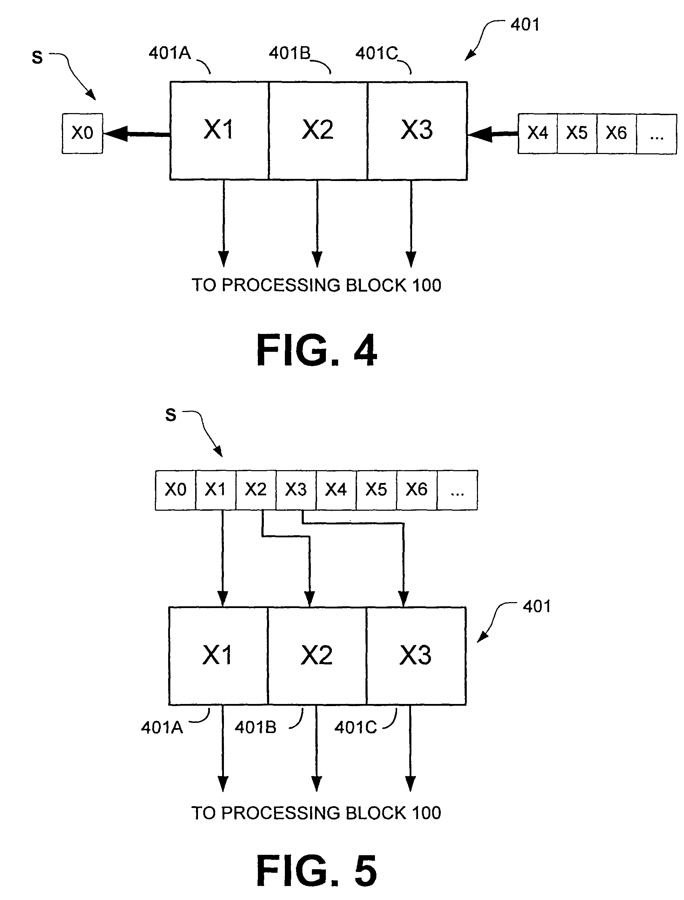

FIG. 4 and FIG. 5 illustrate an input buffer 401. The present invention allows for flexibility in inputting data to the processing unit 400. More particularly, input buffer 401 is, in a preferred embodiment, a programmable first-in, first-out register (FIFO) that allows for data to either be serially shifted into the input buffer 401 as shown in FIG. 4, or input in parallel as shown in FIG. 5.

FIG. 4 shows a datastream S comprised of data bits 0, 1, 2, 3, 4, 5, 6 ...(FIG. 4). Datastream S is shifted into the input buffer 401, 3 bits at a time so as to fill all available data elements 401A, 401B and 401C with data. Data S1, S2 and S3 stored in data elements 401A, 401B and 401C, respectively are then read out of input buffer 401 in parallel and provided to processing unit 100 (FIG. 2).

With reference to FIG. 5, an illustration of input buffer 401 is shown in which data stream S is loaded into the data elements 401A, 401B and 401C of input buffer 401 in parallel. Data loaded into input buffer 401 is then read out in parallel and provided to processing unit 100.

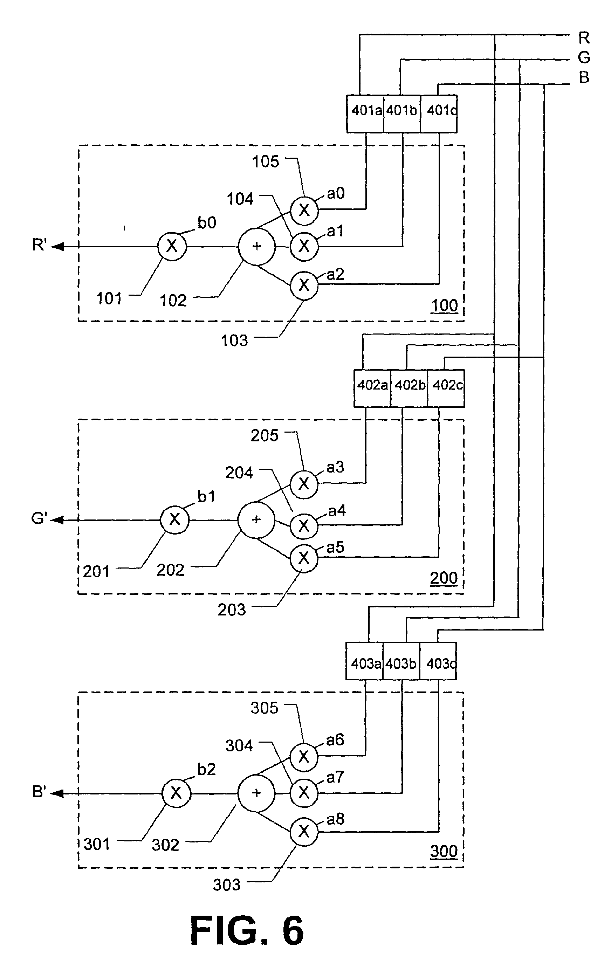

FIG. 6 is an illustration showing an embodiment of the present invention in which input buffers 401, 402 and 403 are configured to receive input data to each data element (401a, 401b, 401c, 402a, 402b, 402c, 403a, 403b, 403c). Multiple bits of data stored in the input buffers 401, 402 and 403 are then output from the respective input buffer in parallel to a respective processing unit 100, 200 or 300. Processed data is output from each processing unit 100, 200 and 300 separately and in parallel. In this illustration, data input is, for example, RGB color data (RED, GREEN, BLUE). Each input buffer 401, 402 and 403 receives RGB color data in parallel and then outputs same to the respective processing block 100, 200 and 300. This embodiment is functionally equivalent to the embodiment shown in FIG. 2 wherein input buffers 401, 402 and 403 are programmed to receive data in parallel as depicted in FIG. 5 and where switch units 531, 532 and 533 are set to the "a" setting.

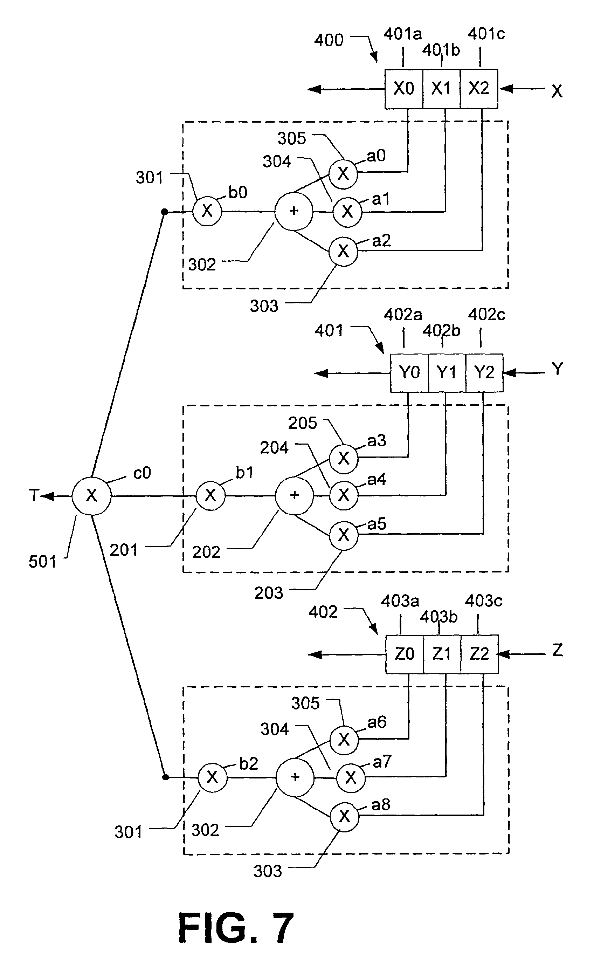

FIG. 7 is an illustration showing an embodiment of the present invention in which input buffers 401, 402 and 403 are configured to receive input data to each data element (401a, 401b, 401c, 402a, 402b, 402c, 403a, 403b, 403c) serially and then output data in parallel to respective processing units 100, 200 and 300. Processed data is output from each processing unit 100, 200 and 300 to a multiplier unit 501. Multiplier unit 501 processes the input data by carrying out multiply operations in accordance with a predefined coefficient c0. In this illustration, data input is, for example, XYZ data values such as those shown in the datastream illustrated in FIG. 3. Each input buffer 401, 402 and 403 receives a respective datastream (X, Y, Z) that is serially shifted into a respective input buffer 401, 402 and 403 as is generally illustrated in FIG. 4. Multiple bits of data stored in the input buffer 401, 402 and 403 are then output from the respective input buffer in parallel to a respective processing unit 100, 200 or 300. This embodiment is functionally equivalent to the embodiment shown in FIG. 2 wherein input buffers 401, 402 and 403 are programmed to serially receive data as generally depicted in FIG. 4 and where switch units 531, 532 and 533 are set to the "b" setting.

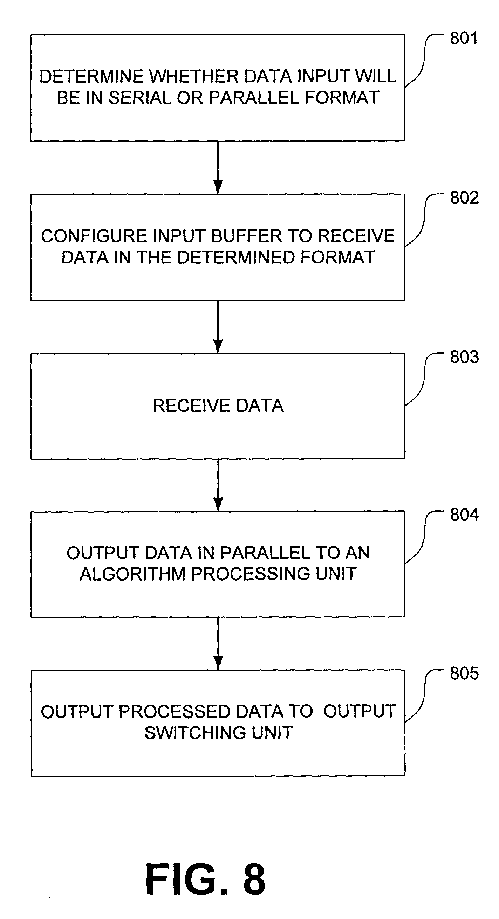

FIG. 8 is a flowchart illustrating the method of the present invention. In this method, it is determined whether data is input in serial or parallel format (801). An input buffer is then configured (programmed) to receive data in the format determined at 801 (802). Data is received by the input buffer(803) and then output in parallel to an algorithm processing unit (804). Processed data is then output from the algorithm processing unit to an output switching unit (805) which is configured to output processed data via a predetermined route.

It will be recognized that the present invention can be scaled to accommodate any number of input data streams. More particularly, additional, or fewer, input buffers can be added (or subtracted) to accommodate input data streams. Similarly, additional processing blocks (100, 200, 300, etc.) and switching units (531, 532, 533...etc.) may be added to accommodate the additional input datastreams. With regard to each processing block, it is also possible to increase the number of multipliers and coefficients provided to each accumulator to accommodate additional data input.

In order to insure a constant datastream for the processing units 100, 200 and 300, a FIFO register can be used to feed each of the input units 401, 402 and 403 with a constant flow of data. Such a FIFO arrangement would also reduce chances of interruption of CPU operations due to an overflow of data input to the processing units 100, 200 and 300. Additionally, the algorithm-processing device of the present invention can be implemented in hardware, software, firmware, or a combination thereof. In the preferred embodiment(s), the algorithm-processing device is implemented in software or firmware that is stored in a memory and that is executed by a suitable instruction execution system. If implemented in hardware, as in an alternative embodiment, the algorithm-processing device can implemented with any or a combination of the following technologies, which are all well known in the art: a discrete logic circuit(s) having logic gates for implementing logic functions upon data signals, an application specific integrated circuit having appropriate logic gates, a programmable gate array(s) (PGA), a field programmable gate array (FPGA), *etc.*

It should be emphasized that the above-described embodiments of the present invention, particularly, any "preferred" embodiments, are merely possible examples of implementations, merely set forth for a clear understanding of the principles of the invention. Many variations and modifications may be made to the above-described embodiment(s) of the invention without departing substantially from the spirit and principles of the invention. All such modifications and variations are intended to be included herein within the scope of the present invention and protected by the following claims.

## Claims

1. A signal processing device comprising:
a programmable input unit (400) for receiving data;
a processing unit (50) for processing said data; and
a switching unit (500) for selectively outputting an output signal from said processing unit (50).

2. Processing device according to claim 1, wherein said programmable input unit (400) comprises an input buffer (401, 402, 403).

3. Processing device according to claim 2, wherein said input buffer (401, 402, 403) comprises a plurality of data elements, each for storing data.

4. Processing device according to claim 3, wherein said input buffer (401, 402, 403) comprises a programmable first-in-first-out register.

5. Processing device according to claim 4, wherein said programmable first-in-first-out register (401, 402, 403) may be selectively configured to load data into said data elements in parallel format.

6. Processing device according to claim 4, wherein said programmable first-in-first-out register (401, 402, 403) may be selectively configured to shift data into said data elements in serial format.

7. A signal processing device comprising:
an input unit (400) for receiving data and outputting said data in parallel to an algorithm-processing unit (100, 200, 300); and
an output unit (500) comprising a plurality of output routes, for receiving data output from said algorithm-processing unit (100, 200, 300) and selectively routing said data output via a selected one of available output routes in accordance with a control signal (CS).

8. A signal processing device comprising:
input means (400) for receiving data;
means for processing (500) for processing said data; and
means for switching (500) for selectively outputting an output signal from said means for processing.

9. A method of processing data comprising the steps of:
determining whether data is input in serial or parallel format (801);
configuring input buffer to receive data in the determined format; receiving data (802);
outputting data in parallel to a processing unit (804); and
outputting processed data via an output switch configured to output processed data via a predetermined route (805).

10. A method of processing data according to claim 9, wherein said output switch (531, 532, 533) is configured in accordance with a control signal (CS).
